# EUROPEAN PATENT SPECIFICATION

(11) **EP 2 329 299 B1**
(45) Date of publication and mention of the grant of the patent: **22.04.2020**
(21) Application number: 09808478.3
(22) Date of filing: 24.07.2009
(51) Int. Cl.: G01V 3/08

(54) **CABLE SYSTEM FOR MARINE DATA ACQUISTION**
KABELSYSTEM FÜR MEERESDATENERFASSUNG
SYSTÈME DE CÂBLE POUR ACQUISITION DE DONNÉES MARINES

(30) Priority: 19.08.2008 US 228989
(43) Date of publication of application: 08.06.2011
(73) Proprietor: PGS Geophysical AS, 0216 Oslo (NO)
(72) Inventor: TENGHAMN, Stig Rune Lennart, Katy, TX 77450 (US)
(74) Representative: Gill Jennings & Every LLP
(86) International application number: PCT/US2009/004313
(87) International publication number: WO 2010/021653

(56) References cited:
- EP-A2- 2 174 167
- US-A- 5 682 445
- US-A1- 2004 027 130
- US-A1- 2004 239 297
- US-A1- 2007 229 083
- US-A1- 2007 229 083
- US-B1- 6 314 056

## Description

### BACKGROUND OF THE INVENTION

### Field of the Invention

The present invention generally relates to the field of electromagnetic survey apparatus for subsurface exploration in the Earth. More particularly, the invention relates to structures for opto-electrical detector electrodes and arrays thereof for detection of electric fields resulting from electromagnetic fields imparted into the Earth; and, in certain particular aspects, to such systems in which a fixed reference potential is provided on a wire for all opto-electrical detector electrodes.

### Description of Related Art

The structure and character of subsurface geological formations underlying a body of water are investigated, surveyed, and mapped using a variety of marine exploration techniques and systems.

To identify hydrocarbon reserves in formations below the bottom of a body of water such as a lake or the ocean (called marine controlled source electromagnetic - "CSEM" - surveying) a geophysical surveying technique is used that uses electromagnetic (EM) energy. In a typical CSEM survey, an EM source and a number of EM receivers are located at or near the bottom of a body of water. The EM source is typically towed over an area of interest in the Earth's subsurface, and the receivers disposed on the water bottom over the area of interest obtain signals related to the distribution of electrical resistivity in the subsurface strata of interest. Such surveying is performed for a range of EM source and EM receiver positions. The EM source emits either or both a time varying electric field and a time varying magnetic field, which propagate outwardly into the overlaying seawater and downwardly into the formations below the water bottom.

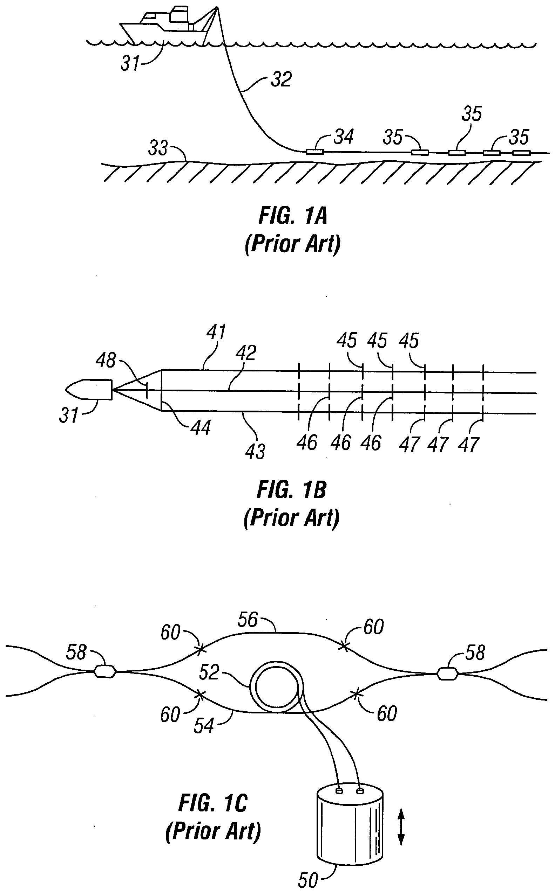

The receivers most commonly used detect and record the induced electric field. The time varying EM field may be induced by passing electric current through an antenna. Fig. 1A shows a known marine CSEM surveying system, as illustrated in International Publication No. WO 02/14906, which includes a vessel 31 towing a cable (or streamer) 32 just above the seabed 33. The cable 32 carries a transmitter dipole antenna 34 and several receiver dipoles 35. The transmitter dipole antenna 34 is controlled from the vessel 31 via the cable 32, and the responses detected by the receiver dipoles 35 are relayed back to the vessel 31 in real time via the cable 32. The publication also shows an arrangement, as illustrated in Fig. 1B, in which the vessel 31 tows three parallel cables 41, 42, 43, each carrying a series of receivers 45, 46, 47. The spacing between the receivers 45, 46, 47 is achieved by means of a spar 44. A transmitter 48 is located on the cable 42. The transmitter 48 has two dipole antennae arranged mutually at right angles. Each receiver also comprises two dipoles mutually at right angles. Measurements can be taken with the transmitter and receiver both inline and parallel. A characteristic difference in values indicates a highly resistive layer located beneath a highly conductive layer.

Fig. 1C shows a known system with fiber optic sensors useful in a marine exploration system (a system as disclosed in U.S. Patent 6,314,056 co-owned with the present invention).

In systems and methods as shown in Fig. 1C, an electrical signal is converted to an optical signal in a fiber optic system. The electrical signal produced by a sensor based upon a parameter being measured is connected across a material that changes dimension responsive to an applied electrical signal. An optical fiber is coupled to the material where dimension changes of the material produce strain in the optical fiber. This strain is operable to affect light traveling through the optical fiber to produce an optical signal for a fiber optic system. Also, the material that changes dimension responsive to an applied electrical signal can be, for example, a piezoelectric ceramic cylinder, a PVDF film, or other piezo-polymer material.

The system of Fig. 1C uses a Mach-Zehnder interferometer with one arm wrapped around a piezoelectric ceramic cylinder or "PZT" to convert an electrical signal, such as from an electrical sensor or a summed group of sensors, into differential interferometric phase.

As shown, a sensor 50 creates a voltage output related to the parameter it is measuring. The output voltage is then placed across a material 52 that changes dimension (e.g., contracts and expands) responsive to the applied output voltage. An optical fiber 54 is wrapped around material 52, and optical fiber 54 is strained by the dimension change of material 52. The system also includes a reference optical fiber 56. To make an interferometer, optical couplers 58 can be fusion spliced, indicated at 60, to sensing optical fiber 54 and reference optical fiber 56, as shown.

The sensor 50 in Fig. 1C can be a conventional detector electrode. Typically, a detector electrode used in seismic exploration applications has a voltage output on the order of some nanovolts (although this can be varied depending on the strength of the magnetic field). Applying this voltage across a standard piezoelectric ceramic cylinder (PZT) induces, for example, an approximately 5 nm/volt change of the mean diameter of a PZT having a one inch (2.54 cm) diameter and a 0.05 inch (0.127 cm) thick wall. This change can be translated into a length change in the optical fiber.

With fiber optic sensors, sensor arrays have been significantly improved by the use of fiber optic telemetry and the increased dynamic range that is provided by an interferometric system.

The present inventor has recognized and addressed the need for an effective and efficient system and method for providing measurements with a plurality of fiber optic detector electrodes in a multi-cable array.

US 2007/0229083 A1 discloses a cable for a marine electromagnetic survey system having a plurality of detectors disposed along it. A crossover coupling and telemetry unit may be provided for converting signals related to the detected voltages imparted across the detectors into an electrical or optical telemetry format for transmitting to a recording system.

EP 2174167 A2 forms prior art under Article 54(3) EPC and shows a marine electromagnetic survey cable that includes a reference electrode extending substantially along the entire length of the cable. A plurality of spaced apart measuring electrodes is disposed along the cable and each is electrically insulated from the reference electrode. A voltage measuring circuit is functionally coupled between each measuring electrode and the reference electrode.

### BRIEF SUMMARY OF THE INVENTION

The present invention, in certain aspects, discloses a cable for a marine exploration system according to claim 1 and a method for marine exploration of underground strata according to claim 7.

### BRIEF DESCRIPTION OF THE SEVERAL VIEWS OF THE DRAWINGS

A more particular description of embodiments of the invention briefly summarized above may be had by references to the embodiments which are shown in the drawings which form a part of this specification. These drawings illustrate certain embodiments and are not to be used to improperly limit the scope of the invention which may have other equally effective or equivalent embodiments.
Fig. 1A is a side schematic view of a prior art marine exploration system.
Fig. IB is a top view of the system of Fig. 1A.
Fig. 1C is a side schematic view of part of a prior art marine exploration system.
Fig. 2 is a top schematic view of a system according to the present invention.
Fig. 3 is a cross-section view of a sensor cable according to the present invention.
Fig. 4A is a side schematic view of a system according to the present invention.
Fig. 4B is a top schematic view of the system of Fig. 4A.
Fig. 4C is a cross-section view of part of the system of Fig. 4A

Certain embodiments of the invention are shown in the above-identified figures and described in detail below. Various aspects and features of embodiments of the invention are described below and some are set out in the dependent claims. Any combination of aspects and/or features described below or shown in the dependent claims can be used except where such aspects and/or features are mutually exclusive. It should be understood that the appended drawings and description herein are of certain particular embodiments and are not intended to limit the invention or the appended claims. On the contrary, the intention is to cover all modifications, equivalents and alternatives falling within the scope of the invention as defined by the appended claims. In showing and describing the detailed embodiments, like or identical reference numerals are used to identify common or similar elements. The figures are not necessarily to scale and certain features and certain views of the figures may be shown exaggerated in scale or in schematic in the interest of clarity and conciseness.

### DETAILED DESCRIPTION OF THE INVENTION

The present invention, in certain aspects, discloses systems and methods for measuring responses in different directions with a multi-cable flexible fiber optic receiver system with multiple detector electrodes. In certain particular aspects, the present invention provides a three-dimensional multi-cable array and an efficient and effective method for taking measurements between any two detector electrodes in the array.

The present invention, in certain aspects, achieves measurement in different directions without electrical wiring being routed from one sensor cable to another.

In certain aspects, the present invention discloses systems and methods in which each cable of a multi-cable array includes an electrical wire with a fixed reference potential imposed thereon which is the same for each wire and, therefore, this same potential is the reference for all detector electrodes on all cables.

The present invention, in certain aspects, discloses a cable for a marine exploration system, the cable including: a cable body, the cable body having a body length; a plurality of detector electrodes (opto-electrical electrodes) spaced-apart along the body length for sensing signals related to underground strata; and an electrical wire with a fixed reference potential imposed thereon, the electrical wire extending along the entire body length of the cable.

The present invention, in certain aspects, discloses a method for marine exploration including: receiving signals reflected from underground strata with a receiver system; the receiver system including at least one cable, the at least one cable having a cable body, the cable body having a body length, a plurality of detector electrodes (e.g. opto-electrical electrodes) spaced-apart along the body length, and an electrical wire with a fixed reference potential imposed thereon, the electrical wire extending along the entire body
length; imposing a fixed reference potential on the electrical wire of the at least one cable; the detector electrode pairs outputting output voltage signals corresponding to the received signals related to the underground strata; and comparing the output voltage signals to the fixed reference potential. In one aspect the at least one cable is a plurality of cables spaced-apart vertically, spaced-apart horizontally, or in a 3-D array both vertically and horizontally.

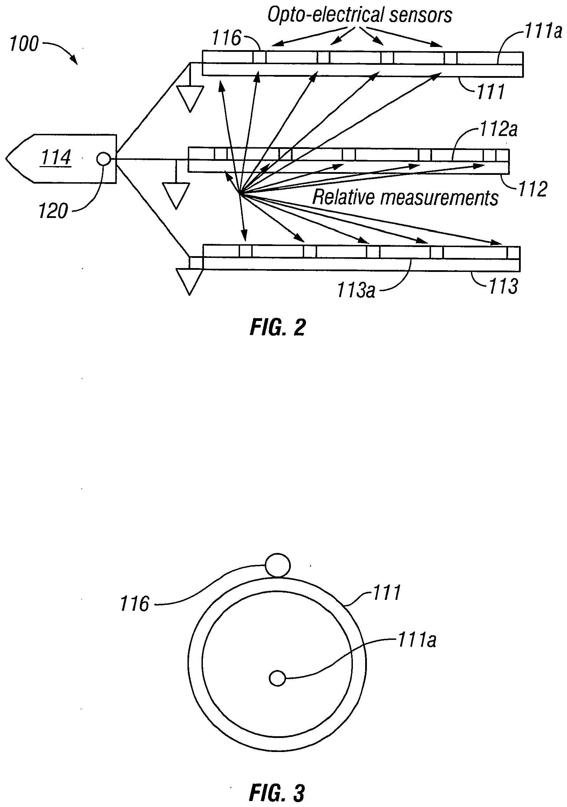

Referring now to FIG. 2, a system 100 according to the present invention has a vessel 114 which tows a streamer array of multiple spaced-apart cables 111, 112, and 113. Each cable may have any desired number of opto-electrical detector electrodes 116 (e.g. as in FIG. 1A) and, in certain aspects, each cable has several thousand opto-electrical detector electrodes. It is within the scope of the present invention to employ any desired number of cables, one or more, in a vertical array, a horizontal array, or a three-dimensional array. Using a three-dimensional array, a three-dimensional representation of the underground strata can be produced.

Each cable 111, 112, 113 has an electrical wire 111a, 112a, 113a, respectively running along its entire length. An electrical source 120 on the vessel 114 imposes a known pre-selected fixed reference potential on all the electrical wires 111a, 112a, 113a (indicated by the downward pointing arrow on each cable). The same fixed reference potential is imposed on all the cables. For example, in one aspect, the electrical wires 111a, 112a, 113a are made of copper and are connected to a ground plate of an electrical source 120. In certain aspects, a fixed reference potential is chosen which is close to zero. Interferometric methods are used, in one aspect, to convert the electrical potential to a phase shift in the fiber optic signal and, thus, there can be a large reference potential without deterioration of the detectability of the potential between detector electrodes of a pair. The detector electrodes 116 can have a sensed voltage in the range of a few nanovolts and the fixed reference potential can be from zero volts to several volts.

The same fixed reference potential is at all points on the cables 111, 112, and 113 and is present for the measurements by all the detector electrodes 116 on all cables. Thus, relative measurements are facilitated between any two detector electrodes on any of the cables and the measurements of any two detector electrodes can be compared to the one fixed reference potential (indicated by the multiple arrows labelled "Relative Measurements", FIG. 2). In use, the electrical wires 111a, 112a, 113a are connected to the source 120 on the vessel.

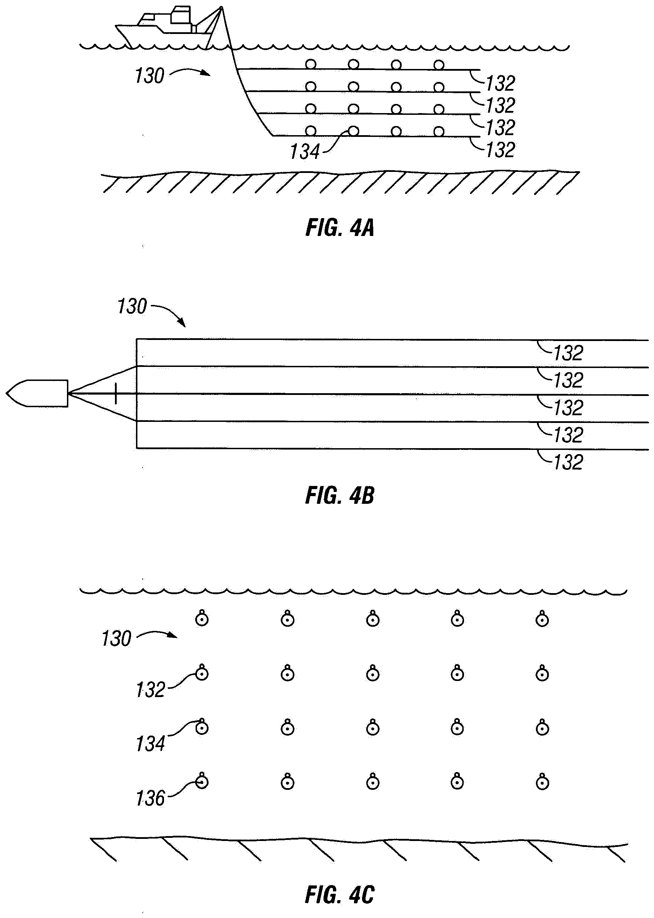

A relative measurement between detector electrodes on various cables measures and indicates the electrical field representative of underground strata based on signals related thereto. With the same fixed reference potential on the electrical wires 111a, 112a, 113a, and with a sufficient number of electrodes 116, accurate measurements in different directions
(e.g. in three orthogonal axes with a system as in FIG. 4A) are possible, yielding a three-dimensional representation of underground strata-and this is done without alternately imposing a known potential on each cable separately. Also, any two detector electrodes in the entire array may be used since the same reference potential is used for all detector electrodes. This is accomplished without a specific wire connected between the two chosen detector electrodes.

In certain aspects, with a relatively large number of detector electrodes, any anomalous variations are compensated for when sensed in real time. When, e.g., thousands of electrodes are used, such variations can be eliminated in real time. Measurements based on signals from several detector electrodes are summed and averaged to reduce the effects of noise. When signals from groups of detector electrodes are summed together, non-coherent noise will be attenuated; and, for example, noise caused by vibration or movement of a cable will be reduced.

FIG. 3 shows schematically in cross-section a cable 111 with detector electrodes 116 and the electrical wire 111a which runs the entire length of the cable 111.

FIGS. 4A-4C illustrate a multi-cable array 130 with cables 132 each with multiple spaced-apart opto-electrical detector electrodes 134. Each cable 132 includes a wire 136 (like the wires 111a, FIGS. 2, 3).

The present invention, therefore, provides in some, but not in necessarily all, embodiments a cable for a marine exploration system, the cable including a cable body, the cable body having a body length; a plurality of opto-electrical detector electrodes spaced-apart along the body length; and an electrical wire extending along the body length, a fixed reference potential imposable on the electrical wire.

The present invention, therefore, provides in some, but not in necessarily all, embodiments an array of cables for a marine exploration system, the array including a plurality of spaced-apart cables, each cable including: a cable body, the cable body having a body length; a plurality of opto-electrical detector electrodes spaced-apart along the body length for sensing signals related to underground strata; an electrical wire with a fixed reference potential imposed thereon, the electrical wire extending along the entire body length; and the cables positioned in spaced-apart relation to each other.

The present invention, therefore, provides in some, but not in necessarily all, embodiments a method for marine exploration of underground strata, the method including: receiving signals related to underground strata with a receiver system; the receiver system having at least one cable, the at least one cable comprising a cable body, the cable body having a body length, a plurality of opto-electrical detector electrodes spaced-apart along the body length for sensing signals related to underground strata, and an electrical wire, the electrical wire extending along the entire body length; imposing a fixed reference potential on the electrical wire of the at least one cable; the opto-electrical detector electrodes outputting optical signals corresponding to received signals related to the underground strata; and comparing the output optical signals to the fixed reference potential.

Accordingly, the present invention includes features and advantages which are believed to enable it to advance multi-cable flexible fiber optic receiver systems for marine exploration technology. Characteristics and advantages of the present invention described above and additional features and benefits will be readily apparent to those skilled in the art upon consideration of the detailed description provided herein and in the accompanying drawings.

Certain embodiments of this invention are not limited to any particular individual feature disclosed here, but include combinations of them distinguished from the prior art in their structures, functions, and/or results achieved. Features of the invention have been broadly described so that the detailed descriptions that follow may be better understood, and in order that the contributions of this invention to the arts may be better appreciated. There are, of course, additional aspects of the invention described herein.

Those skilled in the art who have the benefit of this invention, its teachings, and suggestions will appreciate that the conceptions of this disclosure may be used as a creative basis for designing other structures, methods and systems for carrying out and practicing the present invention within the scope of the claims herein.

The present invention recognizes and addresses the problems and needs in this area and provides a solution to those problems and a satisfactory meeting of those needs in its various possible embodiments and equivalents thereof. To one of skill in this art who has the benefits of this invention's realizations, teachings, disclosures, and suggestions, various purposes and advantages will be appreciated from the description of certain embodiments, given for the purpose of disclosure, when taken in conjunction with the accompanying drawings. The detail in these descriptions is not intended to thwart this patent's object to claim this invention no matter how others may later attempt to disguise it by variations in form or additions of further improvements.

## Claims

1. A cable for a marine exploration system, the cable comprising:
a cable body (111, 112, 113, 132), the cable body (111, 112, 113, 132) having a body length,
a plurality of opto-electrical detectors, each of the plurality of opto-electrical detectors comprising a material (52) that changes dimensions in response to a voltage impressed across the material (52) and an electrode (116, 134), the opto-electrical detectors being disposed at spaced-apart along the body length,
wherein the impressed voltage is imparted between each electrode (116, 134) and an electrical wire (111a, 112a, 113a, 136) extending along the body length, a fixed reference potential imposable on the electrical wire.

2. The cable of claim 1 wherein each opto-electrical detector comprises:
an optical fiber (54) coupled to the material (52), where dimension changes of the material (52) produce strain in the optical fiber (54),
the strain operable to affect light traveling through the optical fiber (54) to produce an optical signal for a fiber optic system (58), and
wherein the optical fiber is part of an optical interferometer (60) and strain produced in the optical fiber (54) creates a phase change in the interferometer (60).

3. An array of cables (111, 112, 113, 132) for a marine exploration system, the array including a plurality of spaced-apart cables according to claims 1 or 2.

4. The array of claim 3 wherein the cables are substantially aligned vertically.

5. The array of claim 3 wherein the cables are substantially aligned horizontally.

6. The array of claim 3 wherein the cables are positioned in a three-dimensional array.

7. A method for marine exploration of underground strata, the method comprising:
receiving signals related to underground strata with a receiver system,
the receiver system comprising at least one cable (111, 112, 113, 132), the at least one cable comprising a cable body, the cable body having a body length, a plurality of opto-electrical detectors, each of the plurality of opto-electrical detectors comprising a material (52) that changes dimensions in response to a voltage impressed across the material (52) and an electrode (116, 134), the opto-electrical detectors being spaced-apart along the body length for sensing signals related to underground strata, and an electrical wire, the electrical wire extending along the entire body length,
wherein the impressed voltage is imparted between each electrode (116, 134) and a fixed reference potential on an electrical wire (111a, 112a, 113a, 136) of the at least one cable,
the opto-electrical detectors outputting optical signals corresponding to received signals related to the underground strata.

8. The method of claim 7 wherein the at least one cable is a plurality of spaced-apart cables.

9. The method of claim 8 wherein the cables are substantially aligned vertically.

10. The method of claim 8 wherein the cables are substantially aligned horizontally.

11. The method of claim 8 wherein the cables are positioned in a three-dimensional array.

12. The method of claim 8 further comprising:
summing and averaging signals from a plurality of the opto-electrical detectors to reduce the effects of noise.

13. The method of claim 11 further comprising:
producing a three-dimensional representation of the underground strata.

14. The method of claim 7 wherein the fixed reference potential is imposed on the electrical wire of the at least one cable by an electrical source on a vessel.

15. The method of claim 8 wherein the fixed reference potential is imposed on the electrical wire of each of the plurality of spaced-apart cables by an electrical source on a vessel.

## Patentansprüche

1. Kabel für ein Meeresforschungssystem, wobei das Kabel umfasst:
Einen Kabelkörper (111, 112, 113, 132), wobei der Kabelkörper (111, 112, 113, 132) eine Körperlänge aufweist,
eine Vielzahl von optoelektrischen Detektoren, wobei jeder der Vielzahl von optoelektrischen Detektoren ein Material (52) umfasst, das Dimensionen als Reaktion auf eine Spannung ändert, die über das Material (52) und eine Elektrode (116, 134) angelegt wird, wobei die optoelektrischen Detektoren beabstandet entlang der Körperlänge angeordnet sind,
wobei die angelegte Spannung zwischen jeder Elektrode (116, 134) und einem elektrischen Draht (111a, 112a, 113a, 136) weitergegeben wird, der sich entlang der Körperlänge erstreckt, wobei sich dem elektrischen Draht ein festes Referenzpotenzial auferlegen lässt.

2. Kabel nach Anspruch 1, wobei jeder optoelektrische Detektor umfasst:
Eine optische Faser (54), die an das Material (52) gekoppelt ist, wo Dimensionsänderungen des Materials (52) Dehnung in der optischen Faser (54) erzeugen,
wobei die Dehnung betriebsfähig ist, Licht zu beeinflussen, das durch die optische Faser (54) wandert, um ein optisches Signal für ein Faseroptiksystem (58) zu erzeugen, und
wobei die optische Faser Teil eines optischen Interferometers (60) ist und in der optischen Faser (54) erzeugte Dehnung eine Phasenänderung im Interferometer (60) erstellt.

3. Anordnung von Kabeln (111, 112, 113, 132) für ein Meeresforschungssystem, wobei die Anordnung eine Vielzahl von beabstandeten Kabeln nach Ansprüchen 1 oder 2 einschließt.

4. Anordnung nach Anspruch 3, wobei die Kabel im Wesentlichen vertikal ausgerichtet sind.

5. Anordnung nach Anspruch 3, wobei die Kabel im Wesentlichen horizontal ausgerichtet sind.

6. Anordnung nach Anspruch 3, wobei die Kabel in einer dreidimensionalen Anordnung positioniert sind.

7. Verfahren zur Meeresforschung von unterirdischen Schichten, wobei das Verfahren umfasst:
Empfangen von Signalen mit einem Empfängersystem, die sich auf unterirdische Schichten beziehen,
das Empfängersystem, das zumindest ein Kabel (111, 112, 113, 132) umfasst, wobei das zumindest eine Kabel einen Kabelkörper umfasst, der Kabelkörper eine Körperlänge, eine Vielzahl von optoelektrischen Detektoren aufweist, jeder der Vielzahl von optoelektrischen Detektoren ein Material (52) umfasst, das Dimensionen als Reaktion auf eine über das Material (52) und eine Elektrode (116, 134) angelegte Spannung ändert, wobei die optoelektrischen Detektoren entlang der Körperlänge zum Abtasten von Signalen beabstandet sind, die sich auf unterirdische Schichten beziehen, und einen elektrischen Draht, wobei sich der elektrische Draht entlang der ganzen Körperlänge erstreckt,
wobei die angelegte Spannung zwischen jeder Elektrode (116, 134) und einem festen Referenzpotenzial auf einem elektrischen Draht (111a, 112a, 113a, 136) des zumindest einen Kabels weitergegeben wird,
wobei die optoelektrischen Detektoren optische Signale ausgeben, die Empfangssignalen entsprechen, die sich auf die unterirdischen Schichten beziehen.

8. Verfahren nach Anspruch 7, wobei das zumindest eine Kabel eine Vielzahl von beabstandeten Kabeln ist.

9. Verfahren nach Anspruch 8, wobei die Kabel im Wesentlichen vertikal ausgerichtet sind.

10. Verfahren nach Anspruch 8, wobei die Kabel im Wesentlichen horizontal ausgerichtet sind.

11. Verfahren nach Anspruch 8, wobei die Kabel in einer dreidimensionalen Anordnung positioniert sind.

12. Verfahren nach Anspruch 8 ferner umfassend:
Summieren und Mitteln von Signalen von einer Vielzahl der optoelektrischen Detektoren, um die Effekte von Rauschen zu reduzieren.

13. Verfahren nach Anspruch 11 ferner umfassend:
Produzieren einer dreidimensionalen Darstellung der unterirdischen Schichten.

14. Verfahren nach Anspruch 7, wobei das feste Referenzpotenzial dem elektrischen Draht des zumindest einen Kabels durch eine elektrische Quelle auf einem Schiff auferlegt wird.

15. Verfahren nach Anspruch 8, wobei das feste Referenzpotenzial dem elektrischen Draht jedes der Vielzahl von beabstandeten Kabeln durch eine elektrische Quelle auf einem Schiff auferlegt wird.

## Revendications

1. Câble pour un système d'exploration marine, le câble comprenant :
un corps de câble (111, 112, 113, 132), le corps de câble (111, 112, 113, 132) possédant une longueur de corps,
une pluralité de détecteurs électro-optiques, chacun de la pluralité de détecteurs électro-optiques comprenant un matériau (52) dont les dimensions changent en réponse à l'application d'une tension dans le matériau (52) et une électrode (116, 134), les détecteurs électro-optiques étant disposés de façon espacée le long de la longueur du corps,
la tension appliquée étant transmise entre chaque électrode (116, 134) et un fil électrique (111a, 112a, 113a, 136) s'étendant le long de la longueur du corps, un potentiel de référence fixe étant imposable sur le fil électrique.

2. Câble selon la revendication 1, chaque détecteur électro-optique comprenant :
une fibre optique (54) couplée au matériau (52), des changements dimensionnels du matériau (52) engendrant une contrainte dans la fibre optique (54),
la contrainte applicable affectant la lumière se déplaçant à travers la fibre optique (54), en produisant un signal optique pour un système de fibres optiques (58), et
la fibre optique faisant partie d'un interféromètre optique (60), et la contrainte produite dans la fibre optique (54) créant un changement de phase dans l'interféromètre (60).

3. Réseau de câbles (111, 112, 113, 132) pour un système d'exploration marine, le réseau comprenant une pluralité de câbles espacés selon les revendications 1 ou 2.

4. Réseau selon la revendication 3, les câbles étant substantiellement alignés verticalement.

5. Réseau selon la revendication 3, les câbles étant substantiellement alignés horizontalement.

6. Réseau selon la revendication 3, les câbles étant positionnés dans un réseau tridimensionnel.

7. Méthode d'exploration marine de strates souterraines, la méthode comprenant :
la réception de signaux relatifs à des strates souterraines à l'aide d'un système récepteur,
le système récepteur comprenant au moins un câble (111, 112, 113, 132), l'au moins un câble comprenant un corps de câble, le corps de câble possédant une longueur de corps, une pluralité de détecteurs électro-optiques, chacun de la pluralité de détecteurs électro-optiques comprenant un matériau (52) dont les dimensions changent en réponse à l'application d'une tension dans le matériau (52) et une électrode (116, 134), les détecteurs électro-optiques étant espacés le long de la longueur du corps pour la détection de signaux relatifs à des strates souterraines, et un fil électrique, le fil électrique s'étendant le long de l'intégralité de la longueur du corps,
la tension appliquée étant transmise entre chaque électrode (116, 134) et un potentiel de référence fixe sur un fil électrique (111a, 112a, 113a, 136) de l'au moins un câble,
les détecteurs électro-optiques émettant des signaux optiques correspondant à des signaux reçus relatifs aux strates souterraines.

8. Méthode selon la revendication 7, l'au moins un câble étant une pluralité de câbles espacés.

9. Méthode selon la revendication 8, les câbles étant substantiellement alignés verticalement.

10. Méthode selon la revendication 8, les câbles étant substantiellement alignés horizontalement.

11. Méthode selon la revendication 8, les câbles étant positionnés dans un réseau tridimensionnel.

12. Méthode selon la revendication 8, comprenant en outre :
la sommation et le moyennage de signaux provenant d'une pluralité de détecteurs électro-optiques pour réduire les effets du bruit.

13. Méthode selon la revendication 11, comprenant en outre :
la production d'une représentation tridimensionnelle des strates souterraines.

14. Méthode selon la revendication 7, le potentiel de référence fixe étant imposé au fil électrique de l'au moins un câble, par une source électrique sur un navire.

15. Méthode selon la revendication 8, le potentiel de référence fixe étant imposé au fil électrique de chacun de la pluralité de câbles espacés par une source électrique sur un navire.
